# EUROPÄISCHE PATENTSCHRIFT

(11) **EP 2 974 820 B1**
(45) Veröffentlichungstag und Bekanntmachung des Hinweises auf die Patenterteilung: **12.04.2017**
(21) Anmeldenummer: 14177462.0
(22) Anmeldetag: 17.07.2014
(51) Int. Cl.: B23K 9/10, B23K 9/025, B23K 9/23, B23K 9/235, H01F 13/00, B23K 9/028

(54) **Lichtbogenschweißgerät, System und Verfahren zum Abmagnetisieren eines Metallrohres**
Arc welding device, system and method for de-magnetising a metal pipe
Appareil de soudure à arcs électriques, système et procédé de démagnétisation d'un tube métallique

(43) Veröffentlichungstag der Anmeldung: 20.01.2016
(73) Patentinhaber: EWM AG, 56271 Mündersbach (DE)
(72) Erfinder: Szczesny, Michael, 56271 Mündersbach (DE)
(74) Vertreter: Cohausz & Florack

(56) Entgegenhaltungen:
- EP-A1- 1 791 138
- WO-A1-2008/143546
- FR-A1- 2 347 148
- SU-A1- 149 840

## Beschreibung

Die Erfindung betrifft ein Lichtbogenschweißgerät mit einem Inverter-Leistungsteil, das zur Bereitstellung eines Ausgangsstroms zum Lichtbogenschweißen eingerichtet ist, mit einem Kommutator, der dazu eingerichtet ist, die Stromrichtung des Ausgangsstroms umzukehren, und mit einer Steuereinheit, die zur Steuerung des Lichtbogenschweißgerätes eingerichtet ist.

Derartige Lichtbogenschweißgeräte werden als Schweißstromquellen zum Lichtbogenschweißen verwendet, insbesondere zum Lichtbogenhandschweißen (EN ISO 4063, Prozess 111), das auch als Elektroden-Handschweißen bezeichnet wird, oder zum Metallschutzgasschweißen, insbesondere zum MIG-Schweißen (EN ISO 4063, Prozess 131). Beim Lichtbogenschweißen wird zwischen zwei Elektroden bzw. zwischen einer Elektrode und dem zu schweißenden Werkstück ein Lichtbogen erzeugt, der die für das Schweißen erforderliche Energie bereitstellt. Während des Schweißens wird dem Schmelzbad häufig ein Fülldraht zugeführt, durch den Material für die Schweißnaht zur Verfügung gestellt wird.

Das Lichtbogenschweißen wird unter anderem zur Verbindung von Metallrohren eingesetzt, beispielsweise von unterirdisch verlegten Versorgungs- oder Entsorgungsrohren. Die Metallrohre werden hierbei häufig auf Stoß geschweißt, so dass für den Schweißvorgang eine genaue Ausrichtung der zu verbindenden Rohre und eine präzise Führung des Lichtbogens erforderlich ist. Hierbei tritt häufig das Problem auf, dass einzelne Metallrohre magnetisiert sind, beispielsweise aufgrund einer Magnetisierung während des Herstellungsprozesses der Metallrohre. Bereits eine geringe Magnetisierung eines zu schweißenden Rohrs kann den Lichtbogen jedoch erheblich ablenken, so dass das Lichtbogenschweißen erschwert wird oder sogar unmöglich ist. Weiterhin kann eine Magnetisierung eines Rohres auch die Ausrichtung der Rohre zueinander erschweren.

In der Praxis wird versucht, diesem Problem dadurch zu begegnen, dass ein mit einer Stromquelle verbundenes Kabel um das magnetisierte Rohr gelegt wird und der Strom versuchsweise manuell hoch- und heruntergefahren wird, um auf diese Weise die Magnetisierung des Rohrs zu reduzieren. Diese Vorgehensweise ist jedoch umständlich und führt häufig nicht zum gewünschten Erfolg. Weiterhin erfordert sie eine zusätzliche Stromquelle mit manuell regelbarer Stromstärke, die auf Baustellen häufig nicht zur Verfügung steht oder extra beschafft werden muss.

Ausserdem offenbart FR2347148 eine Stromquelle zum Lichtbogenschweißen unter Gleichstrom, die eine Abmagnetisierungsfunktion zur Verfügung stellt.

Vor diesem Hintergrund liegt der vorliegenden Erfindung die Aufgabe zu Grunde, eine Vorrichtung zur Verfügung zu stellen, mit der eine zuverlässige Abmagnetisierung von Metallrohren in einfacher Weise und ohne aufwändiges Zubehör ermöglicht wird. Diese Aufgabe wird bei einem Lichtbogenschweißgerät mit einem Inverter-Leistungsteil, das zur Bereitstellung eines Ausgangsstroms zum Lichtbogenschweißen eingerichtet ist, mit einem Kommutator, der dazu eingerichtet ist, die Stromrichtung des Ausgangsstroms umzukehren, und mit einer Steuereinheit, die zur Steuerung des Lichtbogenschweißgerätes eingerichtet ist, erfindungsgemäß dadurch gelöst, dass das Lichtbogenschweißgerät neben einer Schweißfunktion eine Abmagnetisierungsfunktion zur Verfügung stellt, wobei die Steuereinheit für die Abmagnetisierungsfunktion dazu eingerichtet ist, ein Abmagnetisierungsprogramm zu durchlaufen, bei dem das Lichtbogenschweißgerät einen Ausgangsstrom mit wechselnder Stromrichtung und abnehmender Stromamplitude bereitstellt. Es wurde erkannt, dass sich mit einem solchen Lichtbogenschweißgerät ein magnetisiertes Metallrohr zuverlässig und ohne aufwändiges Zubehör abmagnetisieren lässt.

Bei dem Inverter-Leistungsteil handelt es sich um eine elektronische Stromquelle zur Bereitstellung eines Schweißstroms. Vorzugsweise ist das Inverter-Leistungsteil dafür ausgelegt, Ausgangsströme von mehr als 100 A, weiter bevorzugt mehr als 200 A, insbesondere mehr als 400 A bereitstellen zu können.

Der Kommutator kann als mechanischer Kommutator oder als elektronischer Kommutator mit elektrischen Schaltern wie zum Beispiel IGBTs, FETs, BipolarTransistoren und/oder Thyristoren ausgebildet sein.

Die Steuereinheit ist zur Steuerung des Lichtbogenschweißgeräts eingerichtet, Hierzu kann die Steuereinheit insbesondere zur Steuerung des Inverter-Leisiungsteils und/oder des Kommutators eingerichtet sein. Die Steuereinheit kann einen Mikroprozessor sowie einen mit dem Mikroprozessor verbundenen Speicher aufweisen. Insbesondere kann der Speicher Befehle enthalten, deren Ausführung auf dem Mikroprozessor die Steuerung des Lichtbogenschweißgeräts veranlasst.

Das Lichtbogenschweißgerät weist eine Schweißfunktion auf. Hierunter wird verstanden, dass das Lichtbogenschweißgerät zum Lichtbogenschweißen eingesetzt werden kann. Zu diesem Zweck kann das Lichtbogenschweißgerät insbesondere elektrische Ausgänge zum Anschluss eines Elektroden- bzw. Schweißkabels aufweisen, um den für das Lichbogenschweißen erforderlichen Lichtbogenschweißstrom als Ausgangsstrom zur Verfügung zu stellen.

Zusätzlich weist das Lichtbogenschweißgerät noch eine Abmagnetisierungsfunktion auf. Es wurde erkannt, dass sich eine Abmagnetisierungsfunktion zur Abmagnetisierung von Metallrohren in vorteilhafter Weise in ein Lichtbogenschweißgerät integrieren lässt, da auf diese Weise eine Abmagnetisierung von Metallrohren ohne aufwändiges Zubehör ermöglicht wird. Indem das Lichtbogenschweißgerät neben der Bereitstellung des Schweißstroms auch zur Bereitstellung des Abmagnetisierungsstroms verwendet wird, kann insbesondere auf eine separate Stromquelle zum Abmagnetisieren verzichtet werden.

Die Steuereinheit ist für die Abmagnetisierungsfunktion dazu eingerichtet, ein Abmagnetisierungsprogramm zu durchlaufen, bei dem das Lichtbogenschweißgerät einen Ausgangsstrom mit wechselnder Stromrichtung und abnehmender Stromamplitude bereitstellt. Es wurde erkannt, dass mit einem solchen Abmagnetisierungsprogramm eine zuverlässigere Abmagnetisierung eines Metallrohrs erreicht werden kann, als durch das versuchsweise manuelle Hoch- und Herunterregeln des Stroms.

Der während des Abmagnetisierungsprogramms bereitgestellte Ausgangsstrom weist eine wechselnde Stromrichtung und eine abnehmende Stromamplitude auf. Demnach wechselt die Stromrichtung des Ausgangsstroms mehrfach während des Abmagnetisierungsprogramms. Unter der Stromamplitude wird vorliegend jeweils die betragsmäßig maximale Stromstärke zwischen zwei Stromrichtungswechseln, d.h. die betragsmäßig maximale Stromstärke je Halbwelle verstanden. Der Verlauf der Stromamplitude ergibt sich demnach insbesondere aus der zeitlichen Entwicklung dieser betragsmäßig maximalen Stromstärken aufeinanderfolgender Halbwellen.

Ein idealisiertes Beispiel für einen solchen Stromverlauf während des Abmagnetisierungsprogramms stellt eine gedämpfte Sinusschwingung der Form I(t) = A · e^{-k·t}· sin(2π · f · t) dar, wobei I die Stromstärke, t die Zeit, A ein Amplitudenfaktor, k ein Dämpfungsfaktor und f die Frequenz der Stromrichtungswechsel ist.

Der Anteil sin(2π · f · t) des Ausgangsstroms I(t) ist von gleichbleibender Stromamplitude und gibt die Frequenz der Stromrichtungswechsel vor. Dieser Sinus-Anteil kann beispielsweise durch eine entsprechende Dreiecks-, Trapez- oder Rechteck-Funktion ersetzt werden, um einen dreieck-, trapez- bzw. rechteckförmigen Ausgangsstrom zu erhalten.

Der Anteil A · e^{-k·t} des Ausgangsstroms I(t) bewirkt die abnehmende Stromamplitude. Daher kann dieser Anteil auch als Hüllkurve des Ausgangsstroms I(t) bezeichnet werden. Unter der abnehmenden Stromamplitude des Ausgangsstroms beim Durchlaufen des Abmagnetisierungsprogramms wird daher insbesondere verstanden, dass der Ausgangsstrom eine abklingende Hüllkurve aufweist. Die abnehmende Stromamplitude zeigt sich weiterhin auch durch die Abnahme der jeweils betragsmäßig maximalen Stromstärken von Halbwelle zu Halbwelle. Unter einer Halbwelle wird jeweils der Stromverlauf zwischen zwei Stromrichtungswechseln verstanden.

Anstelle einer Exponentialfunktion kann der abklingende Anteil des Ausgangsstroms I(t) sich grundsätzlich auch entsprechend einer anderen abnehmenden Funktion verhalten. Beispielsweise ist auch eine lineare Abnahme der Stromsamplitude denkbar.

Das Lichtbogenschweißgerät weist für die Abmagnetisierungsfunktion vorzugsweise elektrische Ausgänge zum Anschluss eines Abmagnetisierungskabels auf, welches mehrfach um das abzumagnetisierende Rohr gelegt wird. Bei den elektrischen Ausgängen kann es sich um die Ausgänge zum Anschluss eines Elektroden- bzw. Schweißkabels für die Schweißfunktion oder auch um separate Ausgänge handeln.

Die zuvor genannte Aufgabe wird weiterhin gelöst durch ein System zum Abmagnetisieren eines Metallrohrs, mit dem zuvor beschriebenen Lichtbogenschweißgerät und mit einem Abmagnetisierungskabel, das mit beiden Enden derart am Lichtbogenschweißgerät anschließbar ist, um einen Ausgangsstrom des Lichtbogenschweißgeräts zu leiten, wobei das Abmagnetisierungskabel dazu ausgelegt ist, spulenartig mehrfach in Umfangsrichtung um das abzumagnetisierende Metallrohr gelegt zu werden und den vom Lichtbogenschweißgerät beim Durchlaufen des Abmagnetisierungsprogramms bereitgestellten Ausgangsstrom zu leiten.

Das Abmagnetisierungskabel weist insbesondere eine Länge auf, die es erlaubt, das Abmagnetisierungskabel spulenartig mehrfach in Umfangsrichtung um das abzumagnetisierende Metallrohr zu legen. Vorzugsweise beträgt die Länge des Abmagnetisierungskabels mindestens 10 m, weiter bevorzugt mindestens 20 m, insbesondere mindestens 40 m.

Weiterhin ist das Abmagnetisierungskabel insbesondere für die maximalen Stromstärken des Ausgangsstroms beim Durchlaufen des Abmagnetisierungsprogramms ausgelegt. Vorzugsweise ist das Abmagnetisierungskabel für Stromstärken von mindestens 200 A, weiter bevorzugt von mindestens 300 A, insbesondere von mindestens 400 A ausgelegt.

Die beiden Enden des Abmagnetisierungskabels und das Lichtbogenschweißgerät weisen vorzugsweise zueinander korrespondierende elektrische Anschlüsse auf, um das Abmagnetisierungskabel beidseitig am Lichtbogenschweißgerät anschließen zu können.

Weiterhin wird die zuvor genannte Aufgabe gelöst durch ein Verfahren zum Abmagnetisieren eines Metallrohrs mittels des zuvor beschriebenen Lichtbogenschweißgeräts bzw. mittels des zuvor beschriebenen Systems, bei dem ein Abmagetisierungskabel spulenartig mehrfach in Umfangsrichtung um das abzumagnetisierende Metallrohr gelegt wird, bei dem beide Enden des Abmagnetisierungskabels derart elektrisch mit dem Lichtbogenschweißgerät verbunden werden, dass ein von dem Lichtbogenschweißgerät bereitgestellter Ausgangsstrom durch das Abmagetisierungskabel leitbar ist und bei dem das Abmagnetisierungsprogramm des Lichtbogenschweißgeräts durchlaufen wird, so dass ein vom Lichtbogenschweißgerät bereitgestellter Ausgangsstrom mit wechselnder Stromrichtung und abnehmender Stromamplitude durch das Abmagnetisierungskabel geleitet wird.

Dieser Ausgangsstrom, der durch das spulenartig um das Metallrohr gelegte Abmagnetisierungskabel geleitet wird, erzeugt im Bereich des Metallrohrs ein entsprechend wechselndes Magnetfeld mit abnehmender Amplitude. Die magnetische Feldstärke im Bereich des Metallrohrs H(t) ist hierbei proportional zum Ausgangsstrom I(t) und zur Anzahl N der Windungen des Abmagnetisierungskabels um das Metallrohr, so dass gilt: H(t) = y · N · I(t), wobei y ein Proportionalitätsfaktor ist.

Die Magnetisierung des Metallrohres ändert sich in dem erzeugten wechselnden Magnetfeld entsprechend seiner Hysterese. Indem nun die Amplitude des Ausgangsstroms und damit die Amplitude der magnetischen Feldstärke beim Durchlaufen des Abmagnetisierungsprogramms reduziert wird, durchläuft die Magnetisierung des Metallrohres nacheinander immer kleinere Hysteresekurven, bis das Metallrohr am Ende des Abmagnetisierungsprogramms im Wesentlichen vollständig abmagnetisiert ist. Zwar kann eine gewisse Restmagnetisierung des Metallrohres zurückbleiben; diese beeinträchtigt das anschließende Lichtbogenschweißen jedoch in erheblich geringerem Maße als die ursprüngliche Magnetisierung. Die Restmagnetisierung des Metallrohres beträgt nach Ende des Abmagnetisierungsprogramms zumindest in einem Teilbereich des Metallrohres, vorzugsweise in einem Randbereich des Metallrohres, insbesondere im Bereich einer Schweißstelle, vorzugsweise weniger als 5 %, weiter bevorzugt weniger als 2,5 %, insbesondere weniger als 1 % der Ausgangsmagnetisierung.

Im Folgenden werden verschiedene Ausführungsformen des Lichtbogenschweißgeräts, des Systems und des Verfahrens beschrieben, wobei die einzelnen Ausführungsformen einerseits beliebig untereinander kombinierbar sind und sich andererseits jeweils sowohl auf das Lichtbogenschweißgerät und das System, als auch auf das Verfahren anwenden lassen.

Bei einer Ausführungsform ist die Steuereinheit derart eingerichtet, dass als Ausgangsstrom zu Beginn des Abmagnetisierungsprogramms zunächst zwei Halbwellen mit im Wesentlichen gleicher Stromamplitude und entgegengesetzter Stromrichtung bereitgestellt werden. Bei den zwei Halbwellen handelt es sich insbesondere um die Halbwellen mit der größten Stromamplitude. Unter im Wesentlichen gleicher Stromamplitude wird insbesondere verstanden, dass die Stromamplituden der beiden Halbwellen betragsmäßig weniger als 10%, vorzugsweise weniger als 5%, insbesondere weniger als 3% voneinander abweichen.

Die Stromamplitude des Ausgangsstroms nimmt bei dieser Ausführungsform erst nach zwei Halbwellen im Wesentlichen gleicher Amplitude ab. Auf diese Weise wird zunächst eine definierte Magnetisierungsrichtung des Metallrohres eingestellt, bevor durch die abnehmende Stromampliude der Abmagnetisierungsprozess erfolgt. Damit kann unabhängig von der ursprünglichen Magnetisierungsrichtung des Metallrohres eine zuverlässige Abmagnetisierung erreicht werden.

Bei einer weiteren Ausführungsform ist die Steuereinheit derart eingerichtet, dass die erste und die letzte Halbwelle des Ausgangsstroms beim Durchlaufen des Abmagnetisierungsprogramms entgegengesetzte Stromrichtungen aufweisen. Es wurde festgestellt, dass auf diese Weise geringere Restmagnetisierungen des Metallrohrs erreichbar sind.

Bei einer Ausführungsform ist die Steuereinheit derart eingerichtet, dass der Ausgangsstrom beim Durchlaufen des Abmagnetisierungsprogramms für einen vorgegebenen Abklingzeitraum, vorzugsweise von 10 s bis 60 s, weiter bevorzugt von 15 s bis 30 s, insbesondere von 20 s bis 25 s, bereitgestellt wird, und dass der Ausgangsstrom vor Beginn und nach Ende des Abklingzeitraums abgeschaltet ist.

Es hat sich herausgestellt, dass eine ausreichende Abmagnetisierung eines Metallrohres mit dem beschriebenen Lichtbogenschweißgerät bereits innerhalb von 60 s oder sogar in noch geringer Zeit erreicht werden kann. Bei zu kurzen Dauern des Abklingzeitraums kann die Hysterese des Metallrohrs jedoch nicht ausreichend häufig durchfahren werden, so dass eine größere Restmagnetisierung des Metallrohrs verbleibt. Zwar könnte dies durch eine Erhöhung der Frequenz der Stromrichtungswechsel teilweise kompensiert werden; hierzu sind jedoch schnellere Kommutatoren erforderlich, die in normalen Lichtbogenschweißgeräten normalerweise nicht verbaut werden. Daher beträgt die Mindestdauer des Abklingzeitraums vorzugsweise 10 s, weiter bevorzugt 15 s, insbesondere 30 s.

Vor und nach dem Abklingzeitraum ist der Ausgangsstrom vorzugsweise abgeschaltet, um ein sicheres Montieren und Demontieren des Abmagnetisierungskabels zu ermöglichen.

Bei einer Ausführungsform ist die Steuereinheit derart eingerichtet, dass die Stromrichtungswechsel des Ausgangsstroms beim Durchlaufen des Abmagnetisierungsprogramms bei Stromstärken von maximal 50 A, vorzugsweise von maximal 10 A, insbesondere von maximal 1 A erfolgen. Auf diese Weise kann die Belastung des Kommutators reduziert und damit dessen Lebensdauer erhöht werden, insbesondere wenn es sich um einen Kommutator mit mechanischen Schaltern handelt. Wird die Stromrichtung bei größeren (momentanen) Stromstärken umgeschaltet, kann es zu Überspannungsüberschlägen kommen, die den Kommutator beschädigen.

Bei einer Ausführungsform ist die Steuereinheit derart eingerichtet, dass die Frequenz der Stromrichtungswechsel des Ausgangsstroms beim Durchlaufen des Abmagnetisierungsprogramms im Bereich 1 bis 200 Hz liegt. Diese Schaltfrequenzen können von typischerweise in Lichtbogenschweißgeräten verbauten Kommutatoren, insbesondere auch von mechanischen Kommutatoren, erreicht werden, so dass keine schnelleren und teureren Kommutatoren vorgesehen werden müssen. Weiterhin haben sich diese Schaltfrequenzen als geeignet herausgestellt, um in angemessener Zeit eine ausreichende Abmagnetisierung des Metallrohrs zu erreichen.

Bei einer Ausführungsform des Verfahrens sind die Anzahl der Windungen des Abmagnetisierungskabels um das Metallrohr und die maximale Stromstärke des Ausgangsstroms während des Abmagnetisierungsprogramms so bemessen, dass im Bereich des Metallrohrs die Koerzitivfeldstärke des Metallrohrs erreicht wird. Vorzugsweise wird im Bereich des Metallrohrs eine magnetische Feldstärke von mindestens 10 A/m, weiter bevorzugt mindestens 50 A/m, insbesondere mindestens 150 A/m erreicht.

Bei einer Ausführungsform weist das Lichtbogenschweißgerät eine Nutzerschnittstelle auf, die einem Nutzer Zugriff auf die Abmagnetisierungsfunktion erlaubt. Zu diesem Zweck kann das Lichtbogenschweißgerät insbesondere ein Bedienteil aufweisen, so dass der Nutzer unmittelbar am Gerät auf die Abmagnetisierungsfunktion zugreifen kann. Über das Bedienteil kann der Nutzer vorzugsweise sowohl auf die Schweißfunktion, als auch auf die Abmagnetisierungsfunktion zugreifen.

Zusätzlich oder alternativ kann das Lichtbogenschweißgerät auch eine Schnittstelle zum Anschluss eines optischen oder elektrischen Datenkabels wie zum Beispiel eine LAN-Schnittstelle oder eine USB-Schnittstelle aufweisen. Auch eine drahtlose Schnittstelle, wie zum Beispiel eine Bluetooth- oder WLAN-Schnittstelle ist denkbar. Über eine derartige Schnittstelle kann der Nutzer beispielsweise mittels eines separaten Bedienteils auf die Abmagnetisierungsfunktion und/oder auf die Schweißfunktion des Lichtbogenschweißgeräts zugreifen.

Bei einer Ausführungsform ist das Lichtbogenschweißgerät durch eine vordefinierte Nutzereingabe über die Nutzerschnittstelle von einem Schweißmodus in einen Abmagnetisierungsmodus umschaltbar, wobei im Abmagnetisierungsmodus die Schweißfunktion deaktiviert und die Abmagnetisierungsfunktion aktiviert ist. Zu diesem Zweck kann insbesondere die Steuereinheit dazu eingerichtet sein, das Lichtbogenschweißgerät bei einer vordefinierten Nutzereingabe über die Nutzerschnittstelle von einem Schweißmodus in einen Abmagnetisierungsmodus umzuschalten. Indem das Lichtbogenschweißgerät einen Schweißmodus und einen Abmagnetisierungsmodus aufweist, können die Schweißfunktion und die Abmagnetisierungsfunktion voneinander getrennt werden, so dass die Betriebssicherheit des Lichtbogenschweißgeräts erhöht wird. Insbesondere kann auf diese Weise verhindert werden, dass ein Nutzer bei Abmagnetisierung eines Metallrohres versehentlich einen Schweißvorgang und damit die Bereitstellung eines hohen Schweißstroms als Ausgangsstrom in Gang setzt.

Das Umschalten zwischen dem Schweißmodus und dem Abmagnetisierungsmodus kann rein elektronisch erfolgen, beispielsweise indem die Steuereinheit einer in einem Speicher gespeicherten Modus-Variablen einen bestimmten Wert zuweist, oder auch zumindest teilweise mechanisch, indem ein mechanischer Schalter betätigt wird. Die Steuereinheit ist vorteilhafterweise dazu eingerichtet, dass der Ausgangsstrom im Abmagnetisierungsmodus außerhalb des Abklingzeitraums abgeschaltet ist. Auf diese Weise wird die Betriebssicherheit des Lichtbogenschweißgeräts weiter erhöht.

Bei einer Ausführungsform ist die Steuereinheit dazu eingerichtet, bei einer vordefinierten Nutzereingabe über die Nutzerschnittstelle das Abmagnetisierungsprogramm zu durchlaufen. Auf diese Weise kann der Nutzer das Abmagnetisierungsprogramm zu einem geeigneten Zeitpunkt starten, wenn er das Abmagnetisierungskabel entsprechend angeordnet hat. Vorzugsweise kann die Steuereinheit dazu eingerichtet sein, bei einer ersten vordefinierten Nutzereingabe über die Nutzerschnittstelle den Ausgangsstrom abzuschalten, und bei einer zweiten vorgegebenen Nutzereingabe über die Nutzerschnittstelle das Abmagnetisierungsprogramm zu durchlaufen. Auf diese Weise kann der Nutzer zunächst sicherstellen, das der Ausgangsstrom für das Anschließen des Abmagnetisierungskabels abgeschaltet ist, bevor er das Abmagnetisierungsprogramm durch eine weitere Nutzereingabe in Gang setzt.

Bei einer Ausführungsform sind über die Nutzerschnittstelle einer, mehrere oder sämtliche der folgenden Parameter für das Abmagnetisierungsprogramm einstellbar:
- die maximale Stromamplitude des Ausgangsstroms,
- die Frequenz der Stromrichtungswechsel,
- die Stromform des Ausgangsstroms und/oder
- die Dauer des Abklingzeitraums.

Auf diese Weise ist es möglich, das Abmagnetisierungsprogramm bedarfsgemäß einzustellen, insbesondere abhängig von der Beschaffenheit des abzumagnetisierenden Metallrohrs, wie dessen Umfang, dessen Material, dessen Koerzitivfeldstärke und/oder dessen Ausgangsmagnetisierung.

Bei einer Ausführungsform ist die Steuereinheit derart eingerichtet, dass der Ausgangsstrom beim Durchlaufen des Abmagnetisierungsprogramms eine Dreiecks-, Trapez-, Rechteck- oder Sinusform aufweist. Gute Abmagnetisierungsergebnisse wurden insbesondere mit einer Trapez- oder Sinusform des Ausgangsstroms erreicht.

Es wurde festgestellt, dass die Änderung der Magnetisierung des Metallrohrs im Magnetfeld eine gewisse Zeit erfordert. Bei einem trapezförmigen Ausgangsstrom nehmen dieser und die dadurch hervorgerufene magnetische Feldstärke ihr betragsmäßiges Maximum pro Halbwelle jeweils für einen ausgedehnten Zeitraum an, so dass die betragsmäßig maximale magnetische Feldstärke pro Halbwelle jeweils länger auf die Magnetisierung des Metallrohrs einwirken kann. Hierdurch kann eine effektivere Abmagnetisierung erreicht werden, so dass ein trapezförmiger Ausgangsstrom bevorzugt ist. Vorzugsweise nimmt der Ausgangsstrom je Halbwelle sein jeweiliges betragsmäßiges Maximum über mindestens 10 %, vorzugsweise mindestens 25 %, insbesondere mindestens 40 % der Halbwellendauer an.

Bei einer Ausführungsform ist das Lichtbogenschweißgerät dazu eingerichtet, den Ausgangsstrom beim Durchlaufen des Abmagnetisierungsprogramms auf eine Maximalstromstärke zu begrenzen, wobei die Maximalstromstärke einen Wert von maximal 500 A, vorzugsweise maximal 350 A, insbesondere maximal 200 A hat. Auf diese kann eine Beschädigung des Lichtbogenschweißgeräts bzw. des Abmagnetisierungskabels, insbesondere ein Durchbrennen des Abmagetisierungskabels verhindert werden.

Bei einer Ausführungsform ist das Lichtbogenschweißgerät als portables Gerät ausgebildet Im Gegensatz zu fest installierten Geräten kann ein solches Gerät ohne weiteres an verschiedenen Stellen beispielsweise auf einer Baustelle aufgestellt werden.

Weitere Merkmale und Vorteile der Erfindung können der nachfolgenden Beschreibung von Ausführungsbeispielen entnommen werden, wobei auf die beigefügte Zeichnung Bezug genommen wird.

In der Zeichnung zeigen
- Fig. 1: ein Ausführungsbeispiel eines Lichtbogenschweißgeräts und eines entsprechenden Systems,
- Fig. 2: ein Beispiel für ein Bedienfeld des Lichtbogenschweißgeräts aus Fig. 1,
- Fig. 3: ein Strom-Zeit-Diagramm als Beispiel eines möglichen Ausgangsstroms beim Durchlaufen des Abmagnetisierungsprogramms und
- Fig. 4: ein Hysterediagramm mit einem Beispiel für die Abmagnetisierung eines Metallrohrs beim Durchlaufen des Abmagnetisierungsprogramms.

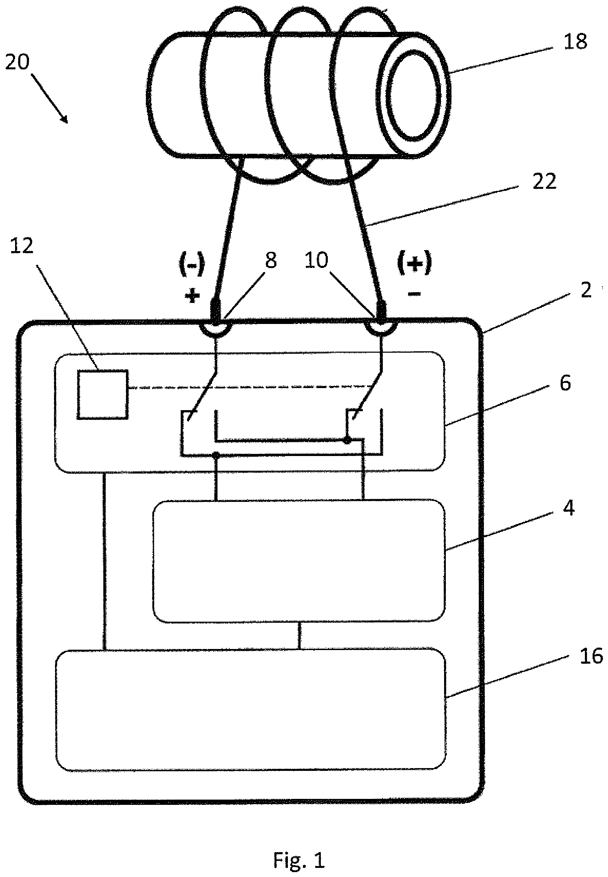

Fig. 1 zeigt ein Lichtbogenschweißgerät 2 mit einem Inverter-Leistungsteil 4 und einem Kommutator 6. Das Inverter-Leistungsteil 4 ist dazu eingerichtet, über zwei elektrische Ausgänge 8, 10 des Lichtbogenschweißgeräts 2 einen Ausgangsstrom bereitzustellen, insbesondere einen Schweißstrom zum Lichtbogenschweißen. Für das Lichtbogenschweißen können entsprechende Elektroden- bzw. Schweißkabel an die Ausgänge 8, 10 des Lichtbogenschweißgeräts 2 angeschlossen werden.

Mit dem Kommutator 6 kann die Stromrichtung des Ausgangsstroms umgekehrt werden. Hierzu kann der Kommutator 6 mechanische Schalter, wie zum Beispiel Relais, aufweisen, die mittels einer Steuerelektronik 12 geschaltet werden können.

Alternativ kann der Kommutator 6 auch elektronische Schalter wie zum Beispiel IGBTs oder FETs aufweisen.

Das Lichtbogenschweißgerät 2 umfasst weiterhin eine Steuereinheit 16, die zur Steuerung des Lichtbogenschweißgeräts 2 eingerichtet ist, insbesondere zur Steuerung des Inverter-Leistungsteils 4 und des Kommutators 6. Beispielsweise kann die Steuereinheit 16 einen Mikroprozessor und einen damit verbundenen Speicher aufweisen, wobei der Speicher zum Beispiel Steuerungsbefehle und -parameter für einen Schweißvorgang beinhalten kann.

Neben einer Schweißfunktion umfasst das Lichtbogenschweißgerät 2 weiterhin auch eine Abmagnetisierungsfunktion, um Metallrohre abzumagnetisieren. Zu diesem Zweck ist die Steuereinheit 16 dazu eingerichtet, ein Abmagnetisierungsprogramm zu durchlaufen, bei dem das Lichtbogenschweißgerät 2 über die Ausgänge 8, 10 einen Ausgangsstrom mit wechselnder Stromrichtung und abnehmender Stromamplitude bereitstellt. Beispielsweise kann der Speicher der Steuereinheit 16 Befehle enthalten, deren Ausführung auf dem Mikroprozessor eine entsprechende Steuerung des Inverter-Leistungsteils 4 und des Kommutators 6 veranlasst.

Um ein Metallrohr 18 abzumagnetisieren, kann insbesondere ein System 20 verwendet werden, das neben dem Lichtbogenschweißgerät 2 ein Abmagnetisierungskabel 22 umfasst, das mit beiden Enden an die Ausgänge 8, 10 anschließbar ist Wie in Fig. 1 schematisch dargestellt, wird das Abmagnetisierungskabel 22 spulenartig mehrfach in Umfangsrichtung um das Metallrohr 18 gelegt und mit beiden Enden an den Ausgängen 8, 10 des Lichtbogenschweißgeräts angeschlossen. Anschließend wird das zuvor beschriebene Abmagnetisierungsprogramm durchlaufen, bei dem ein Ausgangsstrom mit wechselnder Stromrichtung und abnehmender Stromamplitude durch das Abmagnetisierungskabel 22 geleitet wird. Dieser Ausgangsstrom erzeugt im Bereich des Metallrohrs 18 ein entsprechendes wechselndes Magnetfeld mit abnehmender Feldstärke, wodurch das Metallrohr 18 abmagnetisiert wird.

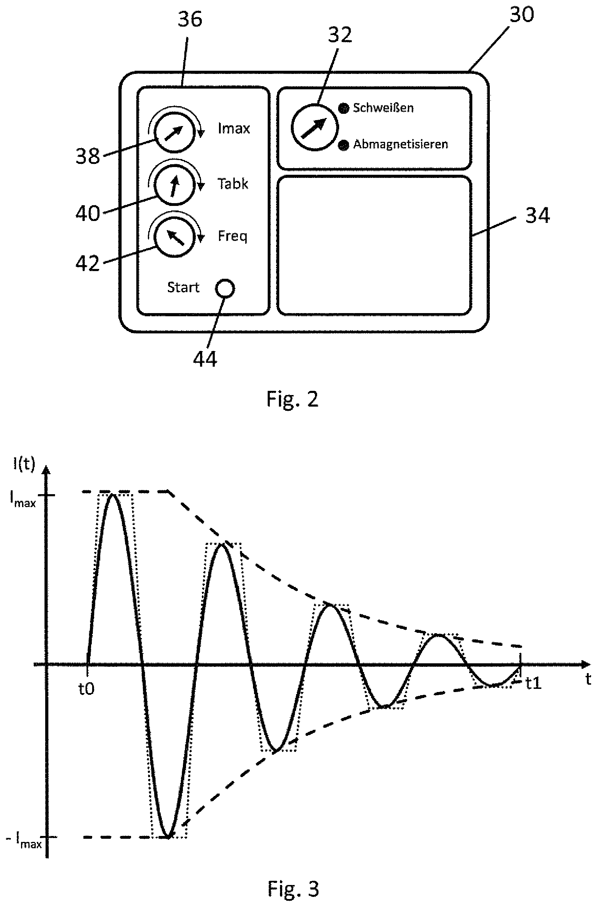

Zur Bedienung des Lichtbogenschweißgeräts 4 kann dies eine mit der Steuereinheit 16 verbundene Nutzerschnittstelle aufweisen, wie zum Beispiel die in Fig. 2 in Form eines Bedienteils schematisch dargestellte Nutzerschnittstelle 30.

Die Nutzerschnittstelle 30 umfasst zunächst ein Bedienelement 32 in Form eines Drehknopfs, mit dem das Lichtbogenschweißgerät 2 zwischen einem Schweißmodus und einem Abmagnetisierungsmodus umgeschaltet werden kann. Die Steuereinheit 16 steuert das Lichtbogenschweißgerät 2 derart, dass im Schweißmodus die Schweißfunktion aktiviert und die Abmagnetisierungsfunktion deaktiviert und dass im Abmagnetisierungsmodus die Schweißfunktion deaktiviert und die Abmagnetisierungsfunktion aktiviert ist.

Die Nutzerschnittstelle 30 weist in einem ersten Feld 34 Bedienelemente (nicht dargestellt) auf, welche die Schweißfunktion betreffen. Weiterhin weist die Nutzerschnittstelle 30 in einem zweiten Feld 36 Bedienelemente auf, die die Abmagnetisierungsfunktion betreffen. Beispielsweise können Bedienelemente 38, 40, 42 vorgesehen sein, mit denen ein Nutzer Parameter des Abmagnetisierungsprogramms einstellen kann, wie zum Beispiel die maximale Stromstärke während des Programms (Imax), die Dauer des Abklingzeitraums (Tabk) oder die Frequenz der Stromrichtungswechsel (Freq). Weiterhin kann ein Bedienelement 44 vorgesehen sein, mit dem ein Nutzer das Abmagnetisierungsprogramm starten kann (Start).

Fig. 3 zeigt ein Diagramm eines beispielhaften Ausgangsstroms I(t) beim Durchlaufen des Abmagnetisierungsprogramms als Funktion der Zeit t. Der Abklingzeitraum des Abmagnetisierungsprogramms beginnt zum Zeitpunkt t0 und endet zum Zeitpunkt t1. Die Dauer des Abklingzeitraums (t1 - t0) kann beispielsweise 30 - 40 s betragen.

Der Ausgangsstrom ist zunächst bis zum Beginn des Abklingzeitraums zum Zeitpunkt t0 abgeschaltet, so dass ein Nutzer das Abmagnetisierungskabel 22 gefahrlos verlegen und an das Lichtbogenschweißgerät 2 anschließen kann. Beispielsweise kann der Strom automatisch abgeschaltet werden, sobald der Nutzer das Lichtbogenschweißgerät 2 mit dem Bedienelement 32 in den Abmagnetisierungsmodus versetzt. Nach Verlegen des Abmagnetisierungskabels 22 kann der Nutzer dann beispielsweise durch Betätigung des Bedienelements 44 den Abmagnetisierungsvorgang starten, so dass der Abklingzeitraum beginnt. Während des Abklingzeitraums stellt das Lichtbogenschweißgerät 2 einen Ausgangsstrom I(t) mit wechselnder Stromrichtung und abnehmender Stromamplitude bereit. Wie in Fig. 3 dargestellt ist, weisen die ersten beiden Halbwellen des Ausgangsstroms vorzugsweise betragsmäßig noch im Wesentlichen die gleiche Stromamplitude Imax auf, bevor die Stromamplitude dann im Laufe der weiteren Halbwellen abnimmt. Die zugehörige Hüllkurve des Ausgangsstroms I(t) ist in Fig. 3 gestrichelt eingezeichnet. Sie ist über die ersten beiden Halbwellen konstant, bevor sie dann beispielsweise exponentiell abfällt.

Fig. 3 zeigt zwei mögliche Stromformen des Ausgangsstroms, nämlich einen Sinusförmigen Strom (durchgezogene Linie) und alternativ einen Trapez-förmigen Strom (punktierte Linie). Die durch den Kommutator 6 bewirkten Stromrichtungswechsel erfolgen bei einer Stromstärke von weniger als 100 A, vorzugsweise weniger als 1 A. Auf diese Weise werden Spannungsspitzen beim Umschalten des Kommutators 6 vermieden, so dass die Schalter des Kommutators weniger belastet werden. Nach dem Ende des Abklingzeitraums zum Zeitpunkt t1 wird der Ausgangsstrom wieder abgeschaltet, so dass ein Nutzer das Abmagnetisierungskabel 22 gefahrlos vom Lichtbogenschweißgerät trennen kann.

Durch den in Fig. 3 schematisch dargestellten Ausgangsstrom I(t) wird im Bereich des Metallrohrs 18 ein entsprechendes Magnetfeld erzeugt, dessen magnetische Feldstärke zum Ausgangsstrom I(t) proportional ist. In diesem wechselnden Magnetfeld ändert sich die Magnetisierung des Metallrohres 18 entsprechend seiner Hysterese. Da die Amplitude des Magnetfelds, d.h. der jeweils betragsmäßig maximale Wert des Magnetfelds während der einzelnen Halbwellen, im Laufe der Zeit abnimmt, erfolgt die Änderung der Magnetisierung auf immer kleineren Hysteresekurven.

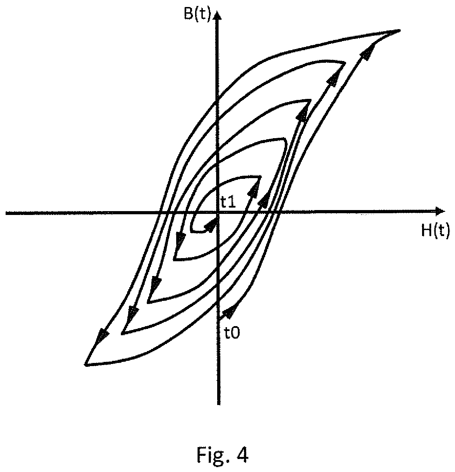

Dieser Verlauf der Magnetisierung lässt sich beispielhaft anhand des in Fig. 4 dargestellten Hysteresediagramms nachvollziehen. Fig. 4 zeigt die magnetische Flussdichte B(t) über der magnetischen Feldstärke H(t) aufgetragen. Aus der magnetischen Flussdichte B(t) bzw. aus deren Differenz zu µ₀ · H(t) ergibt sich unmittelbar die Magnetisierung des Metallrohres 18 (µ₀ ist die magnetische Feldkonstante). Daher wird B(t) in der technischen Fachwelt manchmal auch selbst als "Magnetisierung" bezeichnet.

Bis zum Beginn des Abklingzeitraums ist das Abmagnetisierungskabel stromlos, so dass H(t₀) = 0. Das Metallrohr 18 weist zu diesem Zeitpunkt eine Ausgangsmagnetisierung auf, so dass B(t₀) ≠ 0 (in Fig. 4: B(t₀) < 0). Beim Durchlaufen der ersten beiden Halbwellen des Ausgangsstroms I(t) nehmen diese und damit auch die magnetische Feldstärke H(t) jeweils ihre betragsmäßigen Maxima an (Amplitude der ersten beiden Halbwellen). Die Anzahl der Windungen des Abmagnetisierungskabels 22 um das Metallrohr 18 und die maximale Ausgangsstromstärke Imax werden dabei so eingestellt, dass die dadurch hervorgerufene magnetische Feldstärke Hmax die Koerzitivfeldstärke des Metallrohres 18 erreicht. Im weiteren Verlauf des Abklingzeitraums folgen die magnetische Flussdichte B(t) bzw. die Magnetisierung des Metallrohrs 18 der magnetischen Feldstärke H(t) entsprechend der in Fig. 4 beispielhaft dargestellten Hysteresekurven.

Da die Amplitude des Ausgangsstroms I(t) und damit die Amplitude der magnetischen Feldstärke H(t) über die Dauer des Abklingzeitraums abnehmen, verlaufen die magnetische Flussdichte B(t) bzw. die Magnetisierung auf immer kleineren Hysteresekurven, bis die Magnetisierung des Metallrohrs 18 am Schluss des Abklingzeitraums zumindest bereichsweise nur noch einen Bruchteil der Anfangsmagnetisierung aufweist. Diese Restmagnetisierung wird insbesondere auch dadurch reduziert, dass die erste und die letzte Halbwelle des Ausgangsstroms entgegengesetzte Stromrichtungen aufweisen.

Am Ende des Abmagnetisierungsprogramms zum Zeitpunkt t1 ist das Metallrohr damit zumindest bereichsweise abmagnetisiert, so dass das Metallrohr 18 in dem abmagnetisierten Bereich ohne störende Ablenkung des Lichtbogens geschweißt werden kann.

## Patentansprüche

1. Lichtbogenschweißgerät (2)
- mit einem Inverter-Leistungsteil (4), das zur Bereitstellung eines Ausgangsstroms zum Lichtbogenschweißen eingerichtet ist,
- mit einem Kommutator (6), der dazu eingerichtet ist, die Stromrichtung des Ausgangsstroms umzukehren, und
- mit einer Steuereinheit (16), die zur Steuerung des Lichtbogenschweißgerätes eingerichtet ist,
**dadurch gekennzeichnet,**
- **dass** das Lichtbogenschweißgerät (2) neben einer Schweißfunktion eine Abmagnetisierungsfunktion zur Verfügung stellt, wobei die Steuereinheit (16) für die Abmagnetisierungsfunktion dazu eingerichtet ist, ein Abmagnetisierungsprogramm zu durchlaufen, bei dem das Lichtbogenschweißgerät (2) einen Ausgangsstrom mit wechselnder Stromrichtung und abnehmender Stromamplitude bereitstellt.

2. Lichtbogenschweißgerät nach Anspruch 1,
**dadurch gekennzeichnet,**
**dass** die Steuereinheit (16) derart eingerichtet ist, dass als Ausgangsstrom zu Beginn des Abmagnetisierungsprogramms zunächst zwei Halbwellen mit im Wesentlichen gleicher Stromamplitude und entgegengesetzter Stromrichtung bereitgestellt werden.

3. Lichtbogenschweißgerät nach Anspruch 1 oder 2,
**dadurch gekennzeichnet,**
**dass** die Steuereinheit (16) derart eingerichtet ist, dass die erste und die letzte Halbwelle des Ausgangsstroms beim Durchlaufen des Abmagnetisierungsprogramms entgegengesetzte Stromrichtungen aufweisen.

4. Lichtbogenschweißgerät nach einem der Ansprüche 1 bis 3,
**dadurch gekennzeichnet,**
**dass** die Steuereinheit (16) derart eingerichtet ist, dass der Ausgangsstrom beim Durchlaufen des Abmagnetisierungsprogramms für einen vorgegebenen Abklingzeitraum, vorzugsweise von 10 s bis 60 s, weiter bevorzugt von 15 s bis 30 s, insbesondere von 20 s bis 25 s, bereitgestellt wird, und dass der Ausgangsstrom vor Beginn und nach Ende des Abklingzeitraums abgeschaltet ist.

5. Lichtbogenschweißgerät nach einem der Ansprüche 1 bis 4,
**dadurch gekennzeichnet,**
**dass** die Steuereinheit (16) derart eingerichtet ist, dass die Stromrichtungswechsel des Ausgangsstroms beim Durchlaufen des Abmagnetisierungsprogramms bei Stromstärken von maximal 50 A, vorzugsweise von maximal 10 A, insbesondere von maximal 1 A erfolgen.

6. Lichtbogenschweißgerät nach einem der Ansprüche 1 bis 5,
**dadurch gekennzeichnet,**
**dass** die Steuereinheit (16) derart eingerichtet ist, dass die Frequenz der Stromrichtungswechsel des Ausgangsstroms beim Durchlaufen des Abmagnetisierungsprogramms im Bereich 1 bis 200 Hz liegt.

7. Lichtbogenschweißgerät nach einem der Ansprüche 1 bis 6,
**dadurch gekennzeichnet,**
**dass** das Lichtbogenschweißgerät (2) eine Nutzerschnittstelle (30) aufweist, die einem Nutzer Zugriff auf die Abmagnetisierungsfunktion erlaubt.

8. Lichtbogenschweißgerät nach Anspruch 7,
**dadurch gekennzeichnet,**
**dass** das laichtbogenschweißgerät (2) durch eine vordefinierte Nutzereingabe über die Nutzerschnittstelle (30) von einem Schweißmodus in einen Abmagnetisierungsmodus umschaltbar ist, wobei im Abmagnetisierungsmodus die Schweißfunktion deaktiviert und die Abmagnetisierungsfunktion aktiviert ist.

9. Lichtbogenschweißgerät nach Anspruch 7 oder 8,
**dadurch gekennzeichnet,**
**dass** die Steuereinheit (16) dazu eingerichtet ist, bei einer vordefinierten Nutzereingabe über die Nutzerschnittstelle (30) das Abmagnetisierungsprogramm zu durchlaufen.

10. Lichtbogenschweißgerät nach einem der Ansprüche 7 bis 9,
**dadurch gekennzeichnet,**
**dass** über die Nutzerschnittstelle (30) einer, mehrere oder sämtliche der folgenden Parameter für das Abmagnetisierungsprogramm einstellbar sind:
- die maximale Stromamplitude des Ausgangsstroms,
- die Frequenz der Stromrichtungswechsel,
- die Stromform des Ausgangsstroms und/oder
- die Dauer des Abklingzeitraums.

11. Lichtbogenschweißgerät nach einem der Ansprüche 1 bis 10,
**dadurch gekennzeichnet,**
**dass** die Steuereinheit (16) derart eingerichtet ist, dass der Ausgangsstrom beim Durchlaufen des Abmagnetisierungsprogramms eine Dreiecks-, Rechteck-, Trapez- oder Sinusform aufweist.

12. Lichtbogenschweißgerät nach einem der Ansprüche 1 bis 11,
**dadurch gekennzeichnet,**
**dass** das Lichtbogenschweißgerät (2) dazu eingerichtet ist, den Ausgangsstrom beim Durchlaufen des Abmagnetisierungsprogramms auf eine Maximalstromstärke zu begrenzen, wobei die Maximalstromstärke einen Wert von maximal 500 A, vorzugsweise maximal 350 A, insbesondere maximal 200 A hat.

13. System (20) zum Abmagnetisieren eines Metallrohrs (18),
- mit einem Lichtbogenschweißgerät (2) nach einem der Ansprüche 1 bis 12 und
- mit einem Abmagnetisierungskabel (22), das mit beiden Enden derart am Lichtbogenschweißgerät (2) anschließbar ist, um einen Ausgangsstrom des Lichtbogenschweißgeräts (2) zu leiten,
- wobei das Abmagnetisierungskabel (22) dazu ausgelegt ist, spulenartig mehrfach in Umfangsrichtung um das abzumagnetisierende Metallrohr (18) gelegt zu werden und den vom Lichtbogenschweißgerät (2) beim Durchlaufen des Abmagnetisierungsprogramms bereitgestellten Ausgangsstrom zu leiten,

14. Verfahren zum Abmagnetisieren eines Metallrohrs (18) mittels eines Lichtbogenschweißgeräts (2) nach einem der Ansprüche 1 bis 12 oder mittels eines Systems (20) nach Anspruch 13,
- bei dem ein Abmagetisierungskabel (22) spulenartig mehrfach in Umfangsrichtung um das abzumagnetisierende Metallrohr (18) gelegt wird,
- bei dem beide Enden des Abmagnetisierungskabels (22) derart elektrisch mit dem Lichtbogenschweißgerät (2) verbunden werden, dass ein von dem Lichtbogenschweißgerät (2) bereitgestellter Ausgangsstrom durch das Abmagetisierungskabel (22) leitbar ist, und
- bei dem das Abmagnetisierungsprogramm des Lichtbogenschweißgeräts (2) durchlaufen wird, so dass ein vom Lichtbogenschweißgerät (2) bereitgestellter Ausgangsstrom mit wechselnder Stromrichtung und abnehmender Stromamplitude durch das Abmagnetisierungskabel (22) geleitet wird.

## Claims

1. Arc welding device (2)
- having an inverter power unit (5), which is configured to provide an output current for arc welding,
- having a commutator (6), which is configured to reverse the current direction of the output current, and
- having a control unit (16), which is configured to control the arc welding device,
**characterised in**
- **that** the arc welding device (2) provides a demagnetisation function in addition to a welding function, wherein the control unit (16) for the demagnetisation function is configured to run through a demagnetisation program, in which the arc welding device (2) provides an output current with alternating current direction and decreasing current amplitude.

2. Arc welding device according to Claim 1,
**characterised in that**
the control unit (16) is configured such that at the beginning of the demagnetisation program two half-waves with essentially equal current amplitude and opposite current direction are initially provided as output current.

3. Arc welding device according to Claim 1 or 2,
**characterised in that**
the control unit (16) is configured such that the first and the last half-waves of the output current, when running through the demagnetisation program, have opposite current directions.

4. Arc welding device according to any one of Claims 1 to 3,
**characterised in that**
the control unit (16) is configured such that the output current, when running through the demagnetisation program, is provided for a predetermined decay period, preferably from 10 s to 60 s, more preferably from 15 s to 30 s, in particular from 20 s to 25 s, and that the output current is switched off before the beginning and after the end of the decay period.

5. Arc welding device according to any one of Claims 1 to 4,
**characterised in that**
the control unit (16) is configured such that the current direction changes of the output current, when running through the demagnetisation program, occur at current strengths of maximally 50 A, preferably of maximally 10 A, in particular of maximally 1 A.

6. Arc welding device according to any one of Claims 1 to 5,
**characterised in that**
the control unit (16) is configured such that the frequency of the current direction changes of the output current, when running through the demagnetisation program, is in the range of 1 to 200 Hz.

7. Arc welding device according to any one of Claims 1 to 6,
**characterised in that**
the arc welding device (2) has a user interface (30), which provides the user access to the demagnetisation function.

8. Arc welding device according to Claim 7,
**characterised in that**
the arc welding device (2) can be switched over from a welding mode into a demagnetising mode by a pre-defined user input via the user interface (30), wherein in the demagnetisation mode the welding function is deactivated and the demagnetisation function is activated.

9. Arc welding device according to Claim 7 or 8,
**characterised in that**
the control unit (16) is configured to run through the demagnetisation program upon a predefined user input via the user interface (30).

10. Arc welding device according to any one of Claims 7 to 9,
**characterised in that**
one, several or all of the following parameters for the demagnetisation program can be set via the user interface (30):
- the maximum current amplitude of the output current,
- the frequency of the current direction changes,
- the current form of the output current and/or
- the duration of the decay period.

11. Arc welding device according to any one of Claims 1 to 10,
**characterised in that**
the control unit (16) is configured such that the output current, when running through the demagnetisation program, has a triangular, rectangular, trapezoidal or sinusoidal form.

12. Arc welding device according to any one of Claims 1 to 11,
**characterised in that**
the arc welding device (2) is configured to limit the output current to a maximum current strength when running through the demagnetisation program, wherein the maximum current strength has a value of maximally 500 A, preferably maximally 350 A, in particular maximally 200 A.

13. System (20) for demagnetising a metal tube (18),
- with an arc welding device (2) according to any one of Claims 1 to 12 and
- with a demagnetisation cable (22), which can be connected with both ends to the arc welding device (2) in such a manner as to conduct an output current of the arc welding device (2),
- wherein the demagnetisation cable (22) is designed to be placed in the manner of a coil repeatedly in the circumferential direction around the metal tube (18) to be demagnetised and to conduct the output current provided by the arc welding device when running through the demagnetisation program.

14. Method for demagnetising a metal tube (18) by means of an arc welding device (2) according to any one of Claims 1 to 12 or by means of a system (20) according to Claim 13,
- in which a demagnetisation cable (22) is placed in the manner of a coil repeatedly in the circumferential direction around the metal tube (18) to be demagnetised,
- in which both ends of the demagnetisation cable (22) are connected electrically with the arc welding device (2) in such a manner that an output current provided by the arc welding device (2) can be conducted by the demagnetisation cable (22), and
- in which the demagnetisation program of the arc welding device (2) is run through, so that an output current with alternating current direction and decreasing current amplitude provided by the arc welding device (2) is conducted by the demagnetisation cable (22).

## Revendications

1. Appareil de soudage à l'arc (2)
- avec une unité de puissance (4) invertrice qui est configurée de sorte à fournir un courant de sortie pour souder à l'arc,
- avec un commutateur (6) qui est configuré de sorte à inverser le sens du courant du courant de sortie, et
- avec une unité de commande (16) qui est configurée pour commander l'appareil de soudage à l'arc,
**caractérisé en ce que**
- l'appareil de soudage à l'arc (2) met à disposition, outre une fonction de soudage, une fonction de démagnétisation, auquel cas l'unité de commande (16) pour la fonction de démagnétisation est configurée de sorte à exécuter un programme de démagnétisation, dans lequel l'appareil de soudage à l'arc (2) fournit un courant de sortie avec un sens alterné de courant et une amplitude de courant décroissante.

2. Appareil de soudage à l'arc selon la revendication 1,
**caractérisé en ce que**
l'unité de commande (16) est configurée de sorte à ce que, tout d'abord, deux demi-ondes avec des amplitudes de courant essentiellement identiques et des sens de courant opposés soient fournies en tant que courant de sortie au début du programme de démagnétisation.

3. Appareil de soudage à l'arc selon la revendication 1 ou 2,
**caractérisé en ce que**
l'unité de commande (16) est configurée de telle manière que la première et la dernière demi-onde du courant de sortie, lors de l'exécution du programme de démagnétisation, présentent des sens de courant opposés.

4. Appareil de soudage à l'arc selon une des revendications de 1 à 3,
**caractérisé en ce que**
l'unité de commande (16) est configurée de sorte à ce que, lors de l'exécution du programme de démagnétisation, le courant de sortie soit fourni pour un laps de temps de décroissance prédéfini, de préférence de 10 s à 60 s, plus préférablement de 15 s à 30 s, en particulier de 20 s à 25 s, et que le courant de sortie est coupé avant le démarrage et après la fin du laps de temps de décroissance.

5. Appareil de soudage à l'arc selon une des revendications de 1 à 4,
**caractérisé en ce que**
l'unité de commande (16) est configurée de telle sorte que, lors de l'exécution du programme de démagnétisation, les alternances du sens du courant du courant de sortie ont lieu à des intensités de courant maximales de 50 A, de préférence au maximum de 10 A, en particulier au maximum de 1 A.

6. Appareil de soudage à l'arc selon une des revendications de 1 à 5,
**caractérisé en ce que**
l'unité de commande (16) est configurée de telle sorte que la fréquence des alternances du sens du courant du courant de sortie, lors de l'exécution du programme de démagnétisation, se situe dans le domaine allant de 1 à 200 Hz.

7. Appareil de soudage à l'arc selon une des revendications de 1 à 6,
**caractérisé en ce que**
l'appareil de soudage à l'arc (2) présente une interface utilisateur (30) qui permet à un utilisateur d'avoir accès à la fonction de démagnétisation.

8. Appareil de soudage à l'arc selon la revendication 7,
**caractérisé en ce que**
l'appareil de soudage à l'arc (2) est, grâce à une instruction utilisateur prédéfinie par l'intermédiaire de l'interface utilisateur (30), commutable d'un mode soudure en un mode démagnétisation, auquel cas, en mode de démagnétisation la fonction de soudage est désactivée et la fonction de démagnétisation est activée.

9. Appareil de soudage à l'arc selon la revendication 7 ou 8,
**caractérisé en ce que**
l'unité de commande (16) est configurée de sorte à exécuter le programme de démagnétisation par d'une instruction utilisateur prédéfinie à l'aide de l'interface utilisateur (30).

10. Appareil de soudage à l'arc selon une des revendications de 7 à 9,
**caractérisé en ce que**
un, plusieurs, ou tous les paramètres suivants sont ajustables pour le programme de démagnétisation à l'aide de l'interface utilisateur (30) :
- l'amplitude de courant maximale du courant de sortie,
- la fréquence des alternances du sens de courant,
- le type de courant du courant de sortie et/ou
- la durée du laps de temps de décroissance.

11. Appareil de soudage à l'arc selon une des revendications de 1 à 10,
**caractérisé en ce que**
l'unité de commande (16) est configurée de telle sorte que le courant de sortie présente, lors de l'exécution du programme de démagnétisation, une forme triangulaire, rectangulaire, trapézoïdale ou sinusoïdale.

12. Appareil de soudage à l'arc selon une des revendications de 1 à 11,
**caractérisé en ce que**
l'appareil de soudage à l'arc (2) est configuré de manière à limiter le courant de sortie à une intensité maximale de courant lors de l'exécution du programme de démagnétisation, auquel cas l'intensité maximale de courant a une valeur maximale de 500 A, de préférence au maximum 350 A, en particulier au maximum 200 A.

13. Système (20) de démagnétisation d'un tube métallique (18),
- avec un appareil de soudage à l'arc (2) selon une des revendications de 1 à 12 et
- avec un câble de démagnétisation (22) qui est raccordable par les deux extrémités à l'appareil de soudage à l'arc (2), de manière à conduire un courant de sortie de l'appareil de soudage à l'arc (2),
- auquel cas le câble de démagnétisation (22) est conçu pour être disposé à plusieurs reprises, de façon analogue à une bobine, dans une direction circonférentielle autour du tube métallique (18) à démagnétiser et de sorte à conduire le courant de sortie fourni par l'appareil de soudage à l'arc (2) lors de l'exécution du programme de démagnétisation.

14. Procédé de démagnétisation d'un tube métallique (18) à l'aide d'un appareil de soudage à l'arc (2) selon une des revendications de 1 à 12 ou à l'aide d'un système (20) selon la revendication 13,
- lors duquel un câble de démagnétisation (22) est disposé à plusieurs reprises, de façon analogue à une bobine, dans une direction circonférentielle autour du tube métallique (18) à démagnétiser,
- lors duquel les deux extrémités du câble de démagnétisation (22) sont reliées électriquement avec l'appareil de soudage à l'arc (2) de façon à ce qu'un courant de sortie fourni par l'appareil de soudage à l'arc (2) puisse être conduit à travers le câble de démagnétisation (22), et
- lors duquel le programme de démagnétisation de l'appareil de soudage à l'arc (2) est exécuté, de façon à ce qu'un courant de sortie fourni par l'appareil de soudage à l'arc (2) soit conduit avec un sens alterné de courant et une amplitude de courant décroissante à travers le câble de démagnétisation (22).
